# EUROPEAN PATENT SPECIFICATION

(11) **EP 2 496 091 B1**
(45) Date of publication and mention of the grant of the patent: **14.08.2019**
(21) Application number: 10773309.9
(22) Date of filing: 02.11.2010
(51) Int. Cl.: A23D 9/00, C11B 1/10

(54) **VEGETABLE OIL COMPRISING A POLYUNSATURATED FATTY ACID HAVING AT LEAST 20 CARBON ATOMS**
PFLANZLICHES ÖL MIT UNGESÄTTIGTER FETTSÄURE MIT MINDESTENS 20 KOHLENSTOFFATOMEN
HUILE VÉGÉTALE CONTENANT UN ACIDE GRAS POLYINSATURÉ COMPORTANT AU MOINS 20 ATOMES DE CARBONE

(30) Priority: 03.11.2009 US 257772 P; 22.11.2009 WO PCT/EP2009/065593
(43) Date of publication of application: 12.09.2012
(73) Proprietor: DSM IP Assets B.V., 6411 TE Heerlen (NL)
(72) Inventor: VERKOEIJEN, Daniel, Stewartsville, NJ 08886 (US); ZUUR, Kristian, NL-2645 HK Delfgauw (NL); BIJL, Hendrik, Louis, NL-3131 ZD Vlaardingen (NL)
(74) Representative: Hoyng Rokh Monegier LLP
(86) International application number: PCT/EP2010/066599
(87) International publication number: WO 2011/054801

(56) References cited:
- WO-A1-95/11289
- WO-A2-2006/052662
- CN-A- 1 053 930
- HU-A2- 9 600 336
- US-A1- 2006 111 578
- US-A1- 2008 194 685
- US-A1- 2008 220 143
- WU, G., ET AL.: "Stepwise engineering to produce high yields of very long-chain polyunsaturated fatty acids in plants", NATURE BIOTECHNOLOGY, vol. 23, no. 8, 2005, pages 1013-1017, XP002620958,
- KAJIKAWA, M. ET AL.: "PRODUCTION OF ARACHIDONIC AND EICOSAPENTAENOIC ACIDS IN PLANTS USING BRYOPHYTE FATTY ACID DELTA6-DESATURASE, DELTA6-ELONGASE AND DELTA5 DESATURASE GENES", BIOSCIENCE BIOTECHNOLOGY BIOCHEMISTRY., vol. 72, no. 2, 2008, pages 435-444, XP002620960, JPJAPAN SOC. FOR BIOSCIENCE, BIOTECHNOLOGY AND AGROCHEM, TOKYO. ISSN: 0916-8451
- RUI CARLOS ZAMBIAZI, ROMAN PRZYBYLSKI, MOEMA WEBER ZAMBIAZI, CARLA BARBOSA MENDONÇA: "FATTY ACID COMPOSITION OF VEGETABLE OILSAND FATS", CENTRO DE PESQUISA E PROCESSAMENTO DE ALIMENTOS. BOLETIM, vol. 25, no. 1, 2007, pages 111-120, Universidade Federal do Parana * Centro de Pesquisa e Processamento de Alimentos ISSN: 0102-0323
- Muhammad Ahmad Khan ET AL: "Oxidative stability of stripped and nonstripped borage and evening primrose oils and their emulsions in water", JOURNAL OF THE AMERICAN OIL CHEMISTS' SOCIETY (JAOCS), vol. 77, no. 9, 1 September 2000 (2000-09-01), pages 963-969, XP55353259, DE ISSN: 0003-021X, DOI: 10.1007/s11746-000-0152-z
- S. P. J. Namal Senanayake ET AL: "Oxidative stability of structured lipids produced from borage (Borago officinalis L.) and evening primrose (Oenothera biennis L.) oils with docosahexaenoic acid", Journal of the American Oil Chemists' Society, vol. 79, no. 10, 1 October 2002 (2002-10-01), pages 1003-1013, XP055089877, ISSN: 0003-021X, DOI: 10.1007/s11746-002-0594-3
- Wee-Sim Choo ET AL: "Physicochemical and quality characteristics of cold-pressed flaxseed oils", Journal of Food Composition and Analysis, vol. 20, no. 3-4, 1 May 2007 (2007-05-01), pages 202-211, XP55434673, AMSTERDAM, NL ISSN: 0889-1575, DOI: 10.1016/j.jfca.2006.12.002
- S. P. J. Namal Senanayake ET AL: "Oxidative stability of structured lipids produced from borage (Borago officinalis L.) and evening primrose (Oenothera biennis L.) oils with docosahexaenoic acid", Journal of the American Oil Chemists' Society, vol. 79, no. 10, 1 October 2002 (2002-10-01), pages 1003-1013, XP55089877, ISSN: 0003-021X, DOI: 10.1007/s11746-002-0594-3

## Description

The invention relates to a vegetable oil comprising a polyunsaturated fatty acid having at least 20 carbon atoms (LC-PUFA), as defined in the claims, and uses thereof.

Seeds are known sources of polyunsaturated fatty acids having 18 carbon atoms such as linoleic acid and gamma linolenic acid. It is also known that plants can be genetically modified such that the seeds contain LC-PUFAs. This is for instance disclosed in WO2008009600.

The present inventors realized that recovery of the LC-PUFA or oil containing LC-PUFA according to WO2008/009600 results in oil of insufficient quality. US2008/220143 discloses an oilseed plant that produces mature seeds in which the total seed fatty acid profile comprises at least 8.0% arachidonic acid. Also disclosed are seeds obtained from such plants and oil obtained from the seeds of such plants. US 2006/111578 discloses processes for preparing oil compositions having a high concentration of poly-unsaturated fatty acids and oil compositions having a low concentration of alpha-linolenic acid. In addition, it is directed to processes for preparing oil compositions while minimizing oxidation and/or minimizing isomerization of cis-fatty acids to trans-fatty acids. It discloses processes to form non-animal oil having an anisidine value of less than about 3 and comprising less than 1 wt. % trans-fatty acid based on the total weight of fatty acids or derivatives thereof in the non-animal oil. Wu et al. (2005), Stepwise engineering to produce high yields of very long-chain polyunsaturated fatty acids in plants. Nature Biotechnology, 23(8), 1013-1017 describes a method of producing very long polyunsaturated fatty acids (VLCPUFAs) such as arachidonic acid (AA) and eicosapentaenoic acid (EPA) in transgenic *Brassica juncea* seeds. Kajikawa et al. (2014), Production of arachidonic and Eicosapentaenoic Acids in Plants Using Bryophyte Fatty Acid A6-desaturase, A6-Elongase, and A5-Desaturase Genes, Biosci. Biotechnol. Biochem., 72(2), 435-444 describes the production of arachidonic and eicosapentaenoic acids in transgenic tobacco and soybean plants, by introducing and co expressing *M. polymorpha* genes encoding A6-desaturase, A6-elongase, and A5-desaturase in these. Zambiazi et al. (2007), Fatty acid composition of vegetable oils and fats, B.CEPPA, Curitiba, v.25, n.1, p.111-120. describes the fatty acid composition of several vegetable oils and fats, determined by use of gas chromatography (GC-FID). The unsaturated fatty acids determined were palmitoleic, myristoleic, oleic, linoleic, linolenic, gadolenic, eicosadienoic, erucic, docosadienoic, nervonic. WO2006/052662 is directed to providing oil compositions having a high concentration of poly-unsaturated fatty acids, combined with improved stability characteristics and reduced trans-fatty acids. Processes for maintaining the storage stability of an oil are disclosed. WO95/11289 is directed to the stabilisation of polyunsaturates. These triply or higher ethylenically unsaturated organic materials are stabilised by the addition of at least one essential oil. Khan and Shahidi (2000), Oxidative Stability of Stripped and Nonstripped Borage and Evening Primrose Oils and Their Emulsions in Water, JAOCS, Vol. 77, no.9, 963-969 evaluates the oxidative stability of stripped and nonstripped borage and evening primrose oils and their emulsions in water. Senanayake and Shahidi (2002), Oxidative Stability of Structured Lipids Produced from Borage (Borago officinalis L.) and Evening Primrose (Oenothere biennis L.) Oils with Docosahexaenoic Acid, JAOCS, Vol. 79, no. 10 describes the synthesis of structured lipids from y-linolenic acid-rich borage oil and evening primrose oil and compared the oxidative ability of the products with the unmodified borage oil and evening primrose oil. Choo, Birch and Dufour (2006), Physicochemical and quality characteristics of cold pressed flaxseed oils, Journal of Food Composition and Analysis, 20(2007), 202-211 is directed towards the analysis of cold-pressed flaxseed oils sold in New Zealand. Fatty acid composition, tocopherol composition, moisture and volatile matter content, free fatty acids, chlorophyll pigments, total phenolic acids, total flavonoids, acid value, unsaponifiable matter, peroxide value, conjugated dienoic acids, p-anisidine value and specific extinction in the ultraviolet spectrum of the flaxseed oil were measured. HU9600336 discloses a process for producing a vegetable oil composition having essential fatty acids and containing: a) 18-20 oleic acid; (b) 45-50 linoleic acid; (c) 13-25 linolenic acid; (d) 5-6 gamma-linolenic acid; (e) 1-1.5 arachidonic acid; (f) 7.5-15 various other fatty acids. US 2008/0194685 is directed to oilseed plants transformed to produce arachidonic acid, recombinant constructs used in such transformations, methods for producing arachidonic acid in a plant and uses of oils and seeds obtained from such transformed plants in a variety of food and feed applications. LC-PUFA according to WO2008009600 results in oil of insufficient quality.

The inventors realized that the quality of the LC-PUFA and oil comprising the LC-PUFA is of particular concern, since LC-PUFAs are highly sensitive to oxidation. Such sensitivity to oxidation is found to increase further with increasing number of double bonds of the LC-PUFA and/or increasing content of LC-PUFAs.

It is an object of the invention to provide a process for obtaining a polyunsaturated fatty acid having at least 20 carbon atoms (LC-PUFA) or an oil comprising a LC-PUFA from seeds, wherein the LC-PUFA or the oil containing the LC-PUFA has an improved quality.

It is a further object of the invention to provide a vegetable oil comprising a polyunsaturated fatty acid having at least 20 carbon atoms (LC-PUFA), wherein the oil has an improved quality.

According to a first aspect of the invention, there is provided a vegetable oil comprising a polyunsaturated fatty acid having at least 20 carbon atoms (LC-PUFA), which oil has
(a) an anisidine value (AnV) of less than 25;
(b) a peroxide value (POV) of less than 10;
(c) a triglyceride content of greater than 90%; and
(d) an Oil Stability Index (OSI) of greater than 5 hours at 80 °C
wherein the LC-PUFA is arachidonic acid (ARA), and wherein the vegetable oil comprises ARA at a concentration > 15 wt.% with respect to the total fatty acids in the oil.

Further, there is described a process for obtaining a polyunstaturated fatty acid having at least 20 carbon atoms (LC-PUFA) or an oil comprising a LC-PUFA from seeds, said process comprising
(A)
   (i) providing seeds comprising a LC-PUFA and/or an oil comprising a LC-PUFA; and/or
   (ii) drying the seeds; and/or
   (iii) storing the seeds; and/or
   (iv) grinding and/or flaking the seeds; and/or
   (v) heating the seeds; and/or
   (vi) pressing the seeds such as to expell a fraction of oil And,
(B) obtaining the LC-PUFA or oil comprising the LC-PUFA from the seeds, optionally by extraction with a solvent.

### (i) Plants and seeds comprising a LC-PUFA and/or an oil comprising a LC-PUFA

The seeds may be any seeds containing a LC-PUFA and may be the seed of any suitable plant. Preferably, the seeds are the seeds of a transgenic plant. Suitable plants and seeds are for instance described in WO 2005/083093, WO 2008/009600, and WO 2009/130291. Other plants and seeds that can be used in the invention are for instance disclosed in WO 2008/100545, WO 2008/124806, WO 2008/124048, WO 2008/128240, WO 2004/071467, WO 2005/059130. The seeds may be (transgene) soybeans or (transgene) canola seeds. The plant may be a (transgene) soybean plant or a (transgene) canola plant.

In a preferred embodiment, the seeds are of a (transgenic) plant of the family Brassicaceae, for instance the genera *Brassica, Camelina, Melanosinapis, Sinapis, Arabidopsis,* for example the genera and species *Brassica alba, Brassica carinata, Brassica hirta, Brassica napus, Brassicaa rapa ssp., Sinapis arvensis, Brassica juncea, Brassica juncea* var. *juncea, Brassica juncea* var. *crispifolla, Brassica juncea* var. *foliosa, Brassica nigra, Brassica sinapioides, Camelina sativa, Melanosinapis communis, Brassica oleracea or Arabidopsis thaliana.*

It is found that a keeping the keeping the percentage of damaged seeds low, improves the quality of the LC-PUFA or oil containing the LC-PUFA. The (isolated) oil may have a lower AnV, POV, a higher OSI and/or a higher triglyceride content.

Preferably, less than than 12% of the seeds are total damaged seeds, preferably less than 8%, preferably less than 5%, preferably less than 3% of the seeds are total damaged seeds.

Preferably, less than 6% of the seeds are distinctly green seeds, preferably less than 4%, preferably less than 2%, preferably less than 1% of the seeds are distinctly green seeds.

Preferably, less than 0.5% of the seeds are heated seeds, preferably less than 0.3%, preferably less than 0.1%, preferably less than 0.05% of the seeds are heated seeds.

In a preferred embodiment, less than 8% of the seeds are total damaged seeds, less than 4% of the seeds are distinctly green seeds, and less than 0.3% of the seeds are heated seeds. In another preferred embodiment, less than 5% of the seeds are total damaged seeds, less than 2% of the seeds are distinctly green seeds, and less than 0.1% of the seeds are heated seeds. In another preferred embodiment, less than 3% of the seeds are total damaged seeds, less than 1% of the seeds are distinctly green seeds, and less than 0.05% the seeds are heated seeds.

As used herein the percentages of total damaged seeds, distinctly green seeds and heated seeds are determined in accordance with the Official Grain Grading Guide. 2001 of the Canadian Grain Commission (for Canola and Rapeseed)

Seeds having the preferred percentages of total damaged seeds, distinctly green seeds and/or heated seeds can be obtained by appropriate selection of the seeds after harvest.

Further, there are described seeds comprising an LC-PUFA, and which have percentages of total damaged seeds, distinctly green seeds and/or heated seeds as disclosed hereinabove.

The seeds comprise at least 15 wt.%, preferably at least 20 wt.% of an LC-PUFA which is an ω-6 LC-PUFA, with respect to the total fatty acids in the seeds.

The seeds comprise at least 15 wt.%, preferably at least 20 wt.% of ARA, with respect to the total fatty acids in the seeds.

Preferably, the seeds comprise at least 5 wt.%, preferably at least 10 wt.%, preferably at least 15 wt.%, preferably at least 20 wt.% of an ω-3 LC-PUFA, with respect to the total fatty acids in the seeds.

Preferably, the seeds comprise at least 5 wt.%, preferably at least 10 wt.%, preferably at least 15 wt.%, preferably at least 20 wt.% of DHA, with respect to the total fatty acids in the seeds.

Preferably, the seeds comprise less than 2 wt.% of erucic acid, preferably less than 1 wt. %, preferably less than 0.5 wt.% based on the total fatty acids in the seeds.

### (ii) Drying the seeds

In an embodiment of the disclosure, the process comprises drying the seeds. It is found that decreasing the drying temperature improves the quality of the LC-PUFA or oil containing the LC-PUFA. For instance, the (isolated) oil may have a lower AnV, POV, a higher OSI and/or a higher triglyceride content.

In a preferred embodiment, the process disclosed comprises drying the seeds at a temperature of below 40 °C, preferably below 35 °C, more preferably below 30 °C, more preferably below 25 °C. As used herein, the drying temperatures refer to the temperature of the product in the dryer. For instance, if the drier is a fluid bed drier, the drying temperature refers to the temperature of the bed. if It is found that decreasing the temperatures to below the preferred upper limits improves the quality of the oil and/or the LC-PUFA.

The drying may be by any suitable method. The drying may be by natural air drying. Preferably a dryer is used which prevents or minimizes the formation of hot spots. In a preferred embodiment drying is effected using a fluid bed dryer. In a preferred embodiment, conditioned air is used, preferably having a dew point of < 15 °C, preferably < 10 °C, preferably < 5 °C. This further improves the quality of the oil.

Prior to drying the seeds may have a moisture content of for instance 10 to 25 wt.%, such as 15 to 25 wt.%.

The process according to the disclosure may comprise drying the seeds, resulting a moisture content of less than 15 wt.%, for instance less than 12 wt.%, for instance less than 10 wt.%, for instance less 9.5 wt.%, for instance above 6 wt.%, for instance above 7 wt.%, for instance above 8 wt.%. The moisture content may for instance be between 6 and 15 wt.%, for instance between 7 and 12 wt.%, for instance between 8 and 10 wt.%. Obtaining seeds having a moisture content between the abovementioned ranges improves the quality of the oil and/or LC-PUFA. As used herein, the moisture content is calculated on a wet weight basis, i.e. on the basis of the total weight of the seeds, (including dry matter, lipids, and moisture). It and can be determined by the skilled person.

In a further aspect, there are described seeds comprising a LC-PUFA, which have a moisture content of less than 15 wt.%, for instance less than 12 wt.%, for instance less than 10 wt.%, for instance less 9.5 wt.%, for instance above 6 wt.%, for instance above 7 wt.%, for instance above 8 wt.%. The moisture content may for instance be between 6 and 15 wt.%, for instance between 7 and 12 wt.%, for instance between 8 and 10 wt.%. Preferably, the seeds have a percentage of total damaged seeds, distinctly green seeds and/or heated seeds as disclosed hereinabove. In a preferred embodiment, the seeds are obtainable by the drying process as disclosed hereinabove.

In a preferred embodiment, the process comprises drying seeds having the preferred values for the total damaged seeds, distinctly green seeds as mentioned hereinabove.

### (iii) Storing the seeds

In various stages the seeds may be stored. It is found that a decrease of the storage temperature improves the quality of the LC-PUFA and/or oil containing the LC-PUFA. For instance, the (isolated) oil may have a lower AnV, POV, a higher OSI and/or a higher triglyceride content.

Preferably, the process comprising storing the seeds at a temperature of below 10 °C, preferably below 5 °C, preferably below 0 °C, preferably below minus 5 °C, preferably below minus 10 °C. There is no specific lower limit for the storage temperature. The process may comprise storing the seeds at a temperature of above minus 30 °C.

Preferably, seeds are stored having a moisture content of less than 15 wt.%, for instance less than 12 wt.%, for instance less than 10 wt.%, for instance less 9.5 wt.%, for instance above 6 wt.%, for instance above 7 wt.%, for instance above 8 wt.%. The moisture content may for instance be between 6 and 15 wt.%, for instance between 7 and 12 wt.%, for instance between 8 and 10 wt.%. Obtaining seeds having a moisture content between the abovementioned ranges improves the quality of the oil and/or LC-PUFA. As used herein, the moisture content is calculated on a wet weight basis, i.e. on the basis of the total weight of the seeds (including dry matter, lipids, and moisture). It and can be determined by the skilled person.

The preferred moisture contents can be obtained by drying the seeds as described hereinabove.

In a further aspect, there is described a process for storing seeds comprising a LC-PUFA, which process comprises storing the storing the seeds at a temperature of below 10 °C, preferably below 5 °C, preferably below 0 °C, preferably below minus 5 °C, preferably below minus 10 °C. There is no specific lower limit for the storage temperature. The process may comprise storing the seeds at a temperature above minus 30 °C.

Preferably, the process comprises storing seeds have a moisture content as disclosed hereinabove.

Preferably, the process comprises storing seeds having a percentage of total damaged seeds, distinctly green seeds and/or heated seeds as disclosed hereinabove.

Preferably, the process comprises storing seeds obtainable by the drying process as disclosed hereinabove.

The seeds may be stored for any suitable period. The seeds may for instance be stored for at least 1 day, for instance at least 1 week, for instance at least 2 weeks, for instance at least 1 months, for instance at least 3 months. There is no specific upper limit for the storage period. The seeds, may for instance be stored for less than 12 months, for instance less than 6 months.

### (iv) Crushing and/or flaking of the seeds

The process may comprising crushing or flaking, of the seeds, This may facilitate recovery of the LC-PUFA or oil containing the LC-PUFA.

### (v) Heating the seeds

In a preferred embodiment of the disclosure the process comprises heating the seeds, for instance at a temperature above 60 °C.

The process according to the disclosure may comprise heating the seeds at a relatively low temperature. The process may for instance comprise heating the seeds at a temperature between 50 and 90 °C, for instance between 60 and 80 °C, preferably for a period of between 2 to 60 minutes, preferably between 5 to 30 minutes. If an increased temperature is selected, the duration of the heating is preferably decreased.

It is found that heating the seeds according to preferred protocols disclosed herein improves the quality of the LC-PUFA and/or oil containing the LC-PUFA. For instance, the (isolated) oil may have a lower AnV, POV, a higher OSI and/or a higher triglyceride content.

In a preferred embodiment, the process may comprise heating the seeds at a high rate. The process may for instance comprise heating the seeds, whereby the temperature passes from 40 to 70 °C in less than 1 minute, preferably less than 30 seconds, preferably less than 20 seconds. The process may for instance comprise heating the seeds, whereby the temperature passes from 40 to 100 °C in less than 1 minute, preferably less than 30 seconds, preferably less than 20 seconds.

The process according to the disclosure may comprises heating the seeds using superheated steam. The process may for instance comprise contacting the seeds with superheated steam.

Preferably, the process according to the disclosure comprises heating the seeds at a relatively high temperature, e.g. between 120 and 160 °C for a relatively short period. The process may for instance comprise maintaining the seeds at a temperature above 120 °C, for instance below 160 °C, for a period of less than 8 minutes, for instance less than 5 minutes, for instance less than 3 minutes, for instance less than 2 minutes. Maintaining the seeds at a temperature between 120, for instance below and 160 °C may be for a period of at least 5 seconds, preferably at least 10 seconds.

Preferably, the seeds are cooled at a relatively high rate. Preferably, the temperature of the seeds is decreased from the maximum temperature to a temperature of 40 °C in less than 60 minutes, preferably less than 30 minutes, preferably less than 15 minutes.

According to the disclosure the protocols may be used separately or in combination. For instance, the heating at a high rate may be combined with maintaining the seeds at a preferred temperature for a relatively short period and/or with a rapid cooling rate.

The heating is not limited to a specific stage of the process. The heating may be effected prior to or after any comminuting (e.g. crushing or flaking) of the seeds. The disclosure further provides a process for heating seeds comprising a LC-PUFA, whereby the seeds are heated as disclosed hereinabove.

### (vi) pressing the seeds such as to expell a fraction of oil

Pressing the seeds such as to expell a fraction of oil may be performed using methods known in the art. A screw press may be used. In a preferred embodiment, the invention comprises pressing the seeds to expell oil using a press, for instance a screw press, which is cooled.

### (vii) Extracting oil from the seeds with a solvent.

The process according to the disclosure may comprise extracting oil from the seeds with a solvent. Any suitable solvent may be used, for instance a C₁₋₁₀ alkyl ester (e.g. ethyl or butyl acetate), toluene, a C₁₋₃ alcohol (e.g. methanol, propanol), a C₃₋₆ alkanes (e.g. hexane) or a supercritical fluid (e.g. liquid CO₂ or supercritical propane). Preferably, the solvent is a non-polar solvent, for instance a C₃-C₈ alkane (preferably hexane) or a supercritical fluid (preferably supercritical CO₂ or supercritical propane). Extracting the oil with a non-polar solvent has the advantage that an oil with an increased triglyceride content is obtained.

In a preferred embodiment of the disclosure, the weight ratio solvent: seeds is at least 3: 1, preferably at least 5: 1. This enables a more complete extraction of the oil, thereby contributing to the safety of the spent cake resulting after extraction of the oil from the seeds.

In a preferred embodiment, the process according to the disclosure comprises pressing the seeds to expell the oil, resulting in pressed oil and a press cake, and obtaining oil from the press cake by solvent extraction.

### Purifying the oil

Purifying of the oil may comprise degumming, refining, bleaching and/or deodorizing.

These are known steps, and can be carried out by the skilled person. The oil is deodorized, and deodorization is effected at a temperature below 200 °C, preferably below 190 °C, preferably below 185 °C. Decreasing the deodorization temperature to below the preferred values improves the quality of the oil.

In another aspect, the invention provides a process for purifying a vegetable oil comprising an LC-PUFA according to the claims said process comprising deodorizing the oil at a temperature of below 200 °C, preferably below 190 °C, preferably below 185 °C.

In an aspect of the invention the oil according to the invention is a crude oil, and the invention provides a process for obtaining a purified vegetable oil comprising an LC-PUFA, said process comprising purifying the crude oil, according to the claims.

### PUFAs and oils

As used herein, the following abbreviations are used throughout the entire application:
PUFA refers to a polyunsaturated fatty acid
   LC-PUFA (long chain polyunsaturated fatty acid) refers to a PUFA having at least 20 carbon atoms
HUFA (highly unsaturated fatty acid) refers to a PUFA having at least three double bonds
   LC-HUFA (long chain highly unsaturated fatty acid) refers to a polyunsaturated fatty acid having at least 20 carbon atoms and at least three double bonds.

According to the invention, the LC-PUFA includes arachidonic acid (ARA).

The vegetable oil may be any vegetable oil containing ARA. The vegetable oil may be obtained from a plant, for instance a transgenic plant, or seeds of a (transgenic) plant. Examples of plants are disclosed hereinabove.

The vegetable oil according to the invention has an anisidine value (AnV) of less than 25. Preferably, the oil according to the invention has an AnV < 20, preferably < 15, preferably < 10, preferably < 5, preferably < 3, preferably < 2. The vegetable oil may for instance have an AnV > 0.1, for instance > 0.5, for instance > 1. The AnV may be measured according to AOCS Cd-18-90.

The vegetable oil according to the invention also has a peroxide value (POV) of less than 10. Preferably, the oil according to the invention has a POV < 5, preferably < 2, preferably < 1.5, preferably < 1, preferably < 0.5. The vegetable oil may for instance have a POV > 0.1, for instance > 0.2. The POV may be measured according to AOCS Cd-8-53. The unit (for POV) is usually meq/kg.

The vegetable oil according to the invention also has a triglyceride content > 90%, for instance > 91%, for instance > 93%, for instance > 95%, for instance > 96%, for instance > 97%. The oil according to the invention may for instance have a triglyceride content < 99%, for instance < 98%. The triglyceride content may be measured using NMR.

In a preferred embodiment, the vegetable oil according to the invention has a diglyceride content or less than 8%. Preferably, the oil according to the invention has a diglyceride content < 5%, preferably < 3%, preferably < 2%, preferably < 1%. The oil according to the invention may for instance have a diglyceride content > 0.1%, for instance > 0.2%, for instance > 0.5%. The diglyceride content may be determined using NMR.

In a preferred embodiment, the vegetable oil according to the invention has a free fatty acid content of less than 5%. Preferably, the oil according to the invention has a free fatty acid content < 3%, preferably < 2%, preferably < 1%, preferably < 0.5%, preferably < 0.2%, preferably < 0.1 %.The oil according to the invention may for instance have a free fatty acid content > 0.01%, for instance > 0.02%. The free fatty acid content may be determined using AOCS Ca 5a-40.

In a preferred embodiment, the vegetable oil according to the invention has a sterol content of less than 3%. Preferably, the oil according to the invention has a sterol content of preferably < 2%, preferably < 1.5%, preferably < 1%, preferably < 0.8%, preferably < 0.5%.The oil according to the invention may for instance have a sterol content > 0.1%, for instance > 0.2%. As used herein the sterol content refers to the total sterol content, including free sterols and sterol esters. The sterol content may be measured using NMR.

In a preferred embodiment, the vegetable oil according to the invention has a phytosterol content of less than 3%. Preferably, the oil according to the invention has a phytosterol content < 2%, preferably < 1.5%, preferably <1%, preferably < 0.8%, preferably < 0.6%, preferably < 0.5%. The oil according to the invention may for instance comprise phytosterol, and may for instance have a phytosterol content > 0.05%, for instance > 0.1%, for instance > 0.2%. As used herein, the phytosterol content refers to the total phytosterol content, including free phytosterol and phytosterol esters. The phytosterol content may be determined using NMR.

The vegetable oil according to the invention also has an Oil Stability Index (OSI) of greater than 5 hours at 80 °C. Preferably, the oil according to the invention has an OSI > 8 hours at 80 °C, preferably > 10 hours at 80 °C, preferably > 15 hours at 80 °C, preferably > 20 hours at 80 °C, for instance < 50 hours at 80 °C, for instance < 30 hours at 80 °C, for instance < 25 hours at 80 °C. The OSI may be measured according to AOCS Cd 12b-92.

The oil comprises arachidonic acid (ARA) at a concentration > 15 wt.% with respect to the total fatty acids in the oil, preferably > 18 wt.%, preferably > 20 wt.%, preferably > 25 wt.%, preferably > 30 wt.%. The oil may for instance comprise arachidonic acid (ARA) at a concentration of < 50 wt.%, for instance < 40 wt.%, for instance < 25 wt.%, for instance < 22 wt.% with respect to the total fatty acids in the oil.

Preferably, the sum concentration of PUFAs having at least 3 double bonds is at least 20 wt.% with respect to the total fatty acids in the oil, for instance at least 30 wt.%, for instance at least 35 wt.%, for instance at least 40 wt.%. The sum concentration of PUFAs having at least 3 double bonds may for instance be less than 90 wt.%, for instance less than 80wt.%, for instance less than 70 wt.%, for instance less than 60 wt.%.

Further preferred aspects, embodiments and features are disclosed in the claims.

The invention is further disclosed with reference to the following examples without being limited thereto.

### EXAMPLES

Seeds containing 19% Arachidonic acid (with respect to total fatty acids) are obtained from transgenic *Brassica* plants that are transformed using the procedures described in WO2008009600.

The seeds have the following specifications (determined in accordance with the Official Grain Grading Guide, 2001 of the *Canadian Grain* Commission): distinctly green < 2%, total damaged < 5%.

The seeds, having a moisture content of 17 wt.%, are dried using a fluid bed drier. The bed temperature is 28 °C. Conditioned air is used having a dew point of 10 °C. The dried seeds have a moisture content of 8.5 wt.%.

Prior to further processing the dried seeds are stored at a temperature of minus 20°C.

After storage (3 months), the seeds are flaked using a conventional flaking process.

The flakes are subsequently heated to reach a temperature of 130 °C in 20 seconds using superheated steam. The flakes are maintained at this temperature for 1 minute, and cooled to 40 °C in 30 minutes.

Following the heat treatment, the flakes are fed to a cooled expeller to obtain a pressed oil. The biomass exiting the expeller is extracted using hexane (ratio hexane : biomass = 5:1) in a submerged counter-current extractor at a temperature of 40 °C. The hexane is evaporated, yielding a hexane-extracted oil. The pressed oil and hexane-extracted oil are combined resulting in a crude oil.

The crude oil is purified using degumming (acid treatment), alkali purifying (neutralization), and bleaching using standard techniques. After bleaching the oil is steam deodorized under vacuum at a temperature of 180 °C.

The characteristics of the crude and refined oil are given in the table below.

| | EXAMPLE | | REFERENCE EXPERIMENT | |
|---|---|---|---|---|
| | Crude oil | Refined oil | Crude oil | Refined oil |
| Anisidine | 20 | 9 | 55 | 27 |
| POV | 5 | < 1 | 11 | <1 |
| Triglyceride content | 95% | 97% | 86% | 88% |
| OSI at 80 °C | > 10 hrs | > 10 hrs | 2 hrs | 4 hrs |

### REFERENCE EXPERIMENT

Seeds as described in example 1 are treated as follows to recover the oil.

The seeds, having a moisture content of 17 wt.% are dried using a vertical open-flame grain dryer at a temperature of 70 °C resulting in a moisture content of 8.5 wt.%. Prior to further processing the dried seeds are stored at ambient temperature.

After storage (3 months), the seeds are flaked using a conventional flaking process.

After flaking the seeds are steamed at a temperature of 100 °C for 30 minutes.

Following the heat treatment, the flakes are fed to an expeller to obtain a pressed oil. The biomass exiting the expeller is extracted using hexane (ratio hexane : biomass = 5: 1) in a submerged counter-current extractor at a temperature of 40 °C. The hexane is evaporated, yielding a hexane-extracted oil. The pressed oil and hexane-extracted oil are combined resulting in a crude oil.

The crude oil is purified using degumming (acid treatment), alkali purifying (neutralization), and bleaching using standard techniques. After bleaching the oil is steam deodorized under vacuum at a temperature of 180 °C.

### ¹H-NMR (to determine triglyceride content)

About 12 mg of an oil sample is weighted accurately into a glass vial and about 12 mg p-nitrotoluene is weighted accurately on top. The sample is dissolved in CDCl₃ and ¹H-NMR spectrum were recorded on a Bruker Avance III 600, equipped with a cryoprobe, operating at a proton frequency of 600 MHz and at a probe temperature of 300 K. The spectrum for quantification was recorded with a 60-90° excitation pulse using standard quantitative parameters with a relaxation delay of 30 s.

## Claims

1. A vegetable oil comprising a polyunsaturated fatty acid having at least 20 carbon atoms (LC-PUFA), which oil has
(a) an anisidine value (AnV) of less than 25;
(b) a peroxide value (POV) of less than 10;
(c) a triglyceride content of greater than 90%; and
(d) an Oil Stability Index (OSI) of greater than 5 hours at 80 °C,
wherein the LC-PUFA is arachidonic acid (ARA), and wherein the vegetable oil comprises ARA at a concentration > 15 wt.% with respect to the total fatty acids in the oil.

2. An oil according to claim 1, which has an anisidine value (AnV) of less than 25.

3. An oil according to claim 1 or claim 2, which has a peroxide value (POV) of less than 10.

4. An oil according to any preceding claim, which has a triglyceride content of at least 90%.

5. An oil according to any preceding claim, which oil has an Oil Stability Index (OSI) of greater than 5 hours at 80 °C.

6. An oil according to any preceding claim, wherein the sum concentration of PUFAs having at least 3 double bonds is at least 20 wt.% with respect to the total fatty acids in the oil.

7. An oil according to any preceding claim, obtained from a transgenic plant.

8. An oil according to any preceding claim, obtained from a plant of the family Brassicaceae.

9. An oil according to any preceding claim, obtained from a plant of the genus *Brassica.*

10. An oil according to any preceding claim, which is a crude oil.

11. Process wherein the crude oil according to claim 10 is purified, wherein said purifying comprises deodorizing the oil at a temperature of below 200 °C, preferably below 190 °C, preferably below 185 °C.

12. A food product (for humans or animals), comprising an oil according to any one of claims 1 to 9.

13. An infant formula comprising an oil according to any one of claims 1 to 9.

14. A cosmetic composition comprising an oil according to any one of claims 1 to 9.

15. The use of an oil according to any one of claims 1 to 9 for the preparation of food product (for humans or animals).

16. The use of an oil according to any one of claims 1 to 9 for the preparation of an infant formula.

17. The use of an oil according to any one of claims 1
to 9 for the preparation of a cosmetic product.

## Patentansprüche

1. Pflanzenöl, umfassend eine mehrfach ungesättigte Fettsäure mit mindestens 20 Kohlenstoffatomen (LC-PUFA), wobei das Öl
(a) einen Anisidinwert (Anisidine Value, AnV) von unter 25 hat,
(b) einen Peroxidwert (Peroxide Value, POV) von unter 10 hat,
(c) einen Triglyceridgehalt von über 90% hat und
(d) einen Ölstabilitätsindex (Oil Stability Index, OSI) von über 5 Stunden bei 80°C hat,
wobei es sich bei der LC-PUFA um Arachidonsäure (ARA) handelt und wobei das Pflanzenöl ARA in einer Konzentration von > 15 Gew.-%, bezogen auf die Gesamtfettsäuren im Öl, umfasst.

2. Öl nach Anspruch 1 mit einem Anisidinwert (AnV) von unter 25.

3. Öl nach Anspruch 1 oder Anspruch 2 mit einem Peroxidwert (POV) von unter 10.

4. Öl nach einem der vorhergehenden Ansprüche mit einem Triglyceridgehalt von mindestens 90%.

5. Öl nach einem der vorhergehenden Ansprüche mit einem Ölstabilitätsindex (OSI) von über 5 Stunden bei 80°C.

6. Öl nach einem der vorhergehenden Ansprüche, wobei die Summe der Konzentrationen von PUFAs mit mindestens 3 Doppelbindungen mindestens 20 Gew.-%, bezogen auf die Gesamtfettsäuren im Öl, beträgt.

7. Öl nach einem der vorhergehenden Ansprüche, erhalten aus einer transgenen Pflanze.

8. Öl nach einem der vorhergehenden Ansprüche, erhalten aus einer Pflanze der Familie Brassicaceae.

9. Öl nach einem der vorhergehenden Ansprüche, erhalten aus einer Pflanze der Gattung *Brassica.*

10. Öl nach einem der vorhergehenden Ansprüche, bei dem es sich um ein rohes Öl handelt.

11. Verfahren zur Aufreinigung des rohen Öls nach Anspruch 10, wobei das Aufreinigen das Deodorisieren des Öls bei einer Temperatur von unter 200°C, vorzugsweise unter 190°C, vorzugsweise unter 185°C umfasst.

12. Nahrungsmittelprodukt (für Menschen oder Tiere), umfassend ein Öl nach einem der Ansprüche 1 bis 9.

13. Säuglingsnahrung, umfassend ein Öl nach einem der Ansprüche 1 bis 9.

14. Kosmetische Zusammensetzung, umfassend ein Öl nach einem der Ansprüche 1 bis 9.

15. Verwendung eines Öls nach einem der Ansprüche 1 bis 9 zur Herstellung eines Nahrungsmittelprodukts (für Menschen oder Tiere).

16. Verwendung eines Öls nach einem der Ansprüche 1 bis 9 zur Herstellung einer Säuglingsnahrung.

17. Verwendung eines Öls nach einem der Ansprüche 1 bis 9 zur Herstellung eines kosmetischen Produkts.

## Revendications

1. Huile végétale comprenant un acide gras polyinsaturé ayant au moins 20 atomes de carbone (AGPI-LC), laquelle huile possède
(a) un indice d'anisidine (AnV) inférieur à 25 ;
(b) un indice de peroxyde (POV) inférieur à 10 ;
(c) une teneur en triglycérides supérieure à 90% ; et
(d) un Indice de Stabilité d'Huile (OSI) supérieur à 5 heures à 80°C ;
où l'AGPI-LC est l'acide arachidonique (ARA), et où l'huile végétale comprend de l'ARA selon une concentration > 15% en poids par rapport aux acides gras totaux dans l'huile.

2. Huile selon la revendication 1, qui possède un indice d'anisidine (AnV) inférieur à 25.

3. Huile selon la revendication 1 ou la revendication 2, qui possède un indice de peroxyde (POV) inférieur à 10.

4. Huile selon l'une quelconque des revendications précédentes, qui possède une teneur en triglycérides d'au moins 90%.

5. Huile selon l'une quelconque des revendications précédentes, laquelle huile possède un Indice de Stabilité d'Huile (OSI) supérieur à 5 heures à 80°C.

6. Huile selon l'une quelconque des revendications précédentes, dans laquelle la somme des concentrations des AGPI ayant au moins trois doubles liaisons est d'au moins 20% en poids par rapport aux acides gras totaux dans l'huile.

7. Huile selon l'une quelconque des revendications précédentes, obtenue à partir d'une plante transgénique.

8. Huile selon l'une quelconque des revendications précédentes, obtenue à partir d'une plante issue de la famille des *Brassicaceae.*

9. Huile selon l'une quelconque des revendications précédentes, obtenue à partir d'une plante issue du genre *Brassica.*

10. Huile selon l'une quelconque des revendications précédentes, qui est une huile brute.

11. Procédé dans lequel l'huile brute selon la revendication 10 est purifiée, où ladite purification comprend la désodorisation de l'huile à une température inférieure à 200°C, préférablement inférieure à 190°C, préférablement inférieure à 185°C.

12. Produit alimentaire (destiné à l'homme ou aux animaux), comprenant une huile selon l'une quelconque des revendications 1 à 9.

13. Préparation pour nourrissons, comprenant une huile selon l'une quelconque des revendications 1 à 9.

14. Composition cosmétique, comprenant une huile selon l'une quelconque des revendications 1 à 9.

15. Utilisation d'une huile selon l'une quelconque des revendications 1 à 9, pour la préparation d'un produit alimentaire (destiné à l'homme ou aux animaux).

16. Utilisation d'une huile selon l'une quelconque des revendications 1 à 9, pour la préparation d'une préparation pour nourrissons.

17. Utilisation d'une huile selon l'une quelconque des revendications 1 à 9, pour la préparation d'un produit cosmétique.
